Europäisches Patentamt

(19) European Patent Office

Office européen des brevets

(11) Publication number: **0 174 190**
**A2**

## (12) EUROPEAN PATENT APPLICATION

(21) Application number: **85306270.1**

(22) Date of filing: **04.09.85**

(51) Int. Cl.⁴: **B 60 B 27/02**

(30) Priority: **05.09.84 GB 8422363**

(43) Date of publication of application:
**12.03.86 Bulletin 86/11**

(84) Designated Contracting States:
**AT BE DE FR IT NL SE**

(71) Applicant: Dymag Engineering Ltd.
Bumper Farm Industrial Estate
Chippenham Wiltshire SN14 6LH(GB)

(72) Inventor: Boxstrom, Magnus Jacob
24A Beanacre
Nr Melksham Wiltshire(GB)

(74) Representative: Higgins, Michael Roger et al,
Marks & Clerk 57/60 Lincoln's Inn Fields
London WC2A 3LS(GB)

(54) A motor cycle wheel assembly.

(57) Instead of making the wheel with integral brake disk or sprocket wheel carriers thereby rendering it impractical to stock all various different types of wheel for competition and high performance motor cycles, the wheel (10) and carriers (11, 12) are made separately. Drive pins (25) are located in registering holes (16, 24) in the hub portion (13) of the wheel and in the carriers (11, 12) to connect the carriers to the wheel for rotation therewith. Also, means, e.g. a bearing spacer (27) and end caps (28), are provided to hold the wheel and carriers together along the axis of the wheel. Thus carriers and wheels can be matched to meet customers requirements.

FIG.1.

M&C FOLIO: P48811                    WANGDOC: 0301h

## "A MOTOR CYCLE WHEEL ASSEMBLY"

This invention relates to a motor cycle wheel assembly and particularly but not exclusively to a wheel assembly for competition or high performance motor cycles.

Owing to the large variety of wheel rim sizes used on competition and high performance motor cycles and the different shapes and sizes of carriers for brake discs and sprocket wheels employed by motor cycle manufacturers it is impractical to maintain a stock of wheels. Hence it is common practice to cast wheels with large chunks of metal on both sides of the wheel hub for subsequent machining only upon receipt of a specific order from a customer.

According to the present invention, there is provided a motor cycle wheel assembly, comprising a wheel having a rim portion and a hub portion, at least one carrier for a brake disc, sprocket wheel or the like, the carrier having been manufactured separately from the wheel, the hub portion and carrier each having a plurality of holes spaced angularly about the axis of the wheel assembly, drive pins located in the holes of the hub portion and of the carrier to connect the carrier to the hub portion for rotation therewith, and means for preventing the carrier and hub portion from moving away from each other along the axis of the wheel assembly.

Preferred and/or optional features of the invention are set forth in claims 2-15.

The invention also provides a brake disc or socket wheel carrier for a motor cycle wheel assembly, wherein the carrier does not form an integral part of the motor cycle wheel and has a plurality of holes spaced angularly about the axis of the carrier for receiving drive pins which in use connect the carrier to the wheel for rotation therewith.

Hence, it is possible to stock a number of different wheels and carriers, and match them up to meet a customer's particular requirements very quickly indeed.

The invention will now be more particularly described by way of example only with reference to the accompanying drawings, in which:-

Figure 1 is a section through one embodiment of a motor cycle wheel assembly according to the invention with the rim and all but a part of one wheel spoke of the wheel omitted.

Figure 2 is a section through another embodiment of a motor cycle wheel assembly according to the invention, with the rim and all but a part of one wheel spoke of the wheel omitted.

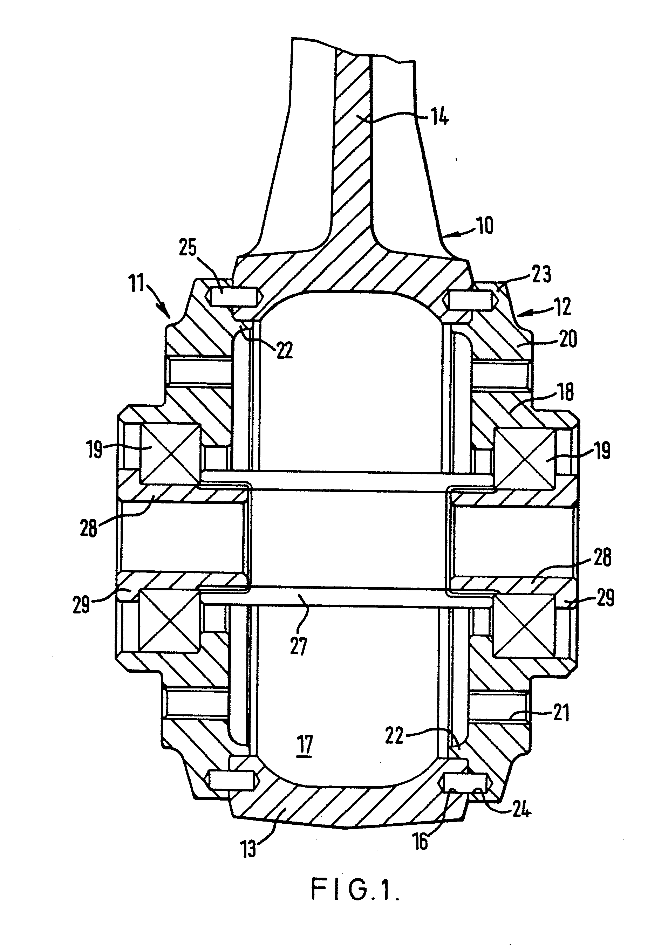

Referring now to Figure 1 of the drawings, the motor cycle wheel assembly shown therein is for the front of a motor cycle and comprises a wheel 10 and two front brake disc carriers 11 and 12. The wheel 10 has a hub portion 13, spokes 14 and a rim (not shown) and is cast from magnesium, aluminium or other appropriate light alloy and then machined to size.

The hub portion 13 has a central bore 17 and is symmetrical with respect to the two sides of the wheel. On each side of the wheel the hub portion 13 has a plurality of blind holes 16 which are angularly spaced apart around the axis of the hub portion 13 and which extend in a direction parallel to the axis of the hub portion 13.

The front disc carriers 11 and 12 are also cast from magnesium, aluminium or other appropriate light alloy and each have an inner portion 18 for receiving ball bearing assemblies 19, an intermediate portion 20 which has holes 21 drilled to receive bolts or other appropriate fasteners to secure a brake disc directly (or indirectly via a disc bell or support) to the carrier (although the disc could be made integral with the carrier) and an outer portion 23. A boss 22 interposed between the intermediate portion 20 and the outer portion 23 is a close fit in the hub portion 13. The outside diameter of the boss 22 is preferably knurled. Moreover, a bonding agent may be provided between each boss 22 and the hub 13. The outer portion 23 has a plurality of blind holes 24 which are angularly spaced apart around the axis of the respective carrier 11, 12 and which register with the holes 16 in the hub portion 13. Drive pins 25 are located in each pair of registering holes 16 and 24 and serve to connect the carriers 11, 12 to the wheel 10 for rotation therewith, whilst the fit between the bosses 22 and the hub portion 13 prevent any radial movement of the carriers relative to the hub portion.

The two carriers 11 and 12 are identical but they may be different in order to incorporate a speedometer drive on one side of the wheel assembly.

A sleeve-like bearing spacer 27 extends through the bore 17 in the hub portion of the wheel and into the inner portions 18 of the two carriers 11 and 12. The spacer 27 is internally threaded at opposite ends and screw-threadably engages with externally threaded end caps 28. Each cap 28 has a radially outwardly projecting flange 29 which is drawn into contact with the bearing assembly received in the respective carrier 11, 12 as the end cap is threaded into the spacer 27 to keep the wheel 10, carriers 11 and 12, and bearing assemblies 19 together and prevent them from moving apart along the axis of the wheel assembly. Any appropriate slots or recesses can be provided in the end caps 28 so that they can be tightened with a suitable tool.

The rear wheel assembly (not shown) may be identical to the front rear assembly but more probably is assymetrical with respect to the two sides of the wheel in order that a sprocket wheel secured to one of the carriers can be spaced further from a plane through the centre of the wheel rim than a brake disc secured to the other carrier.

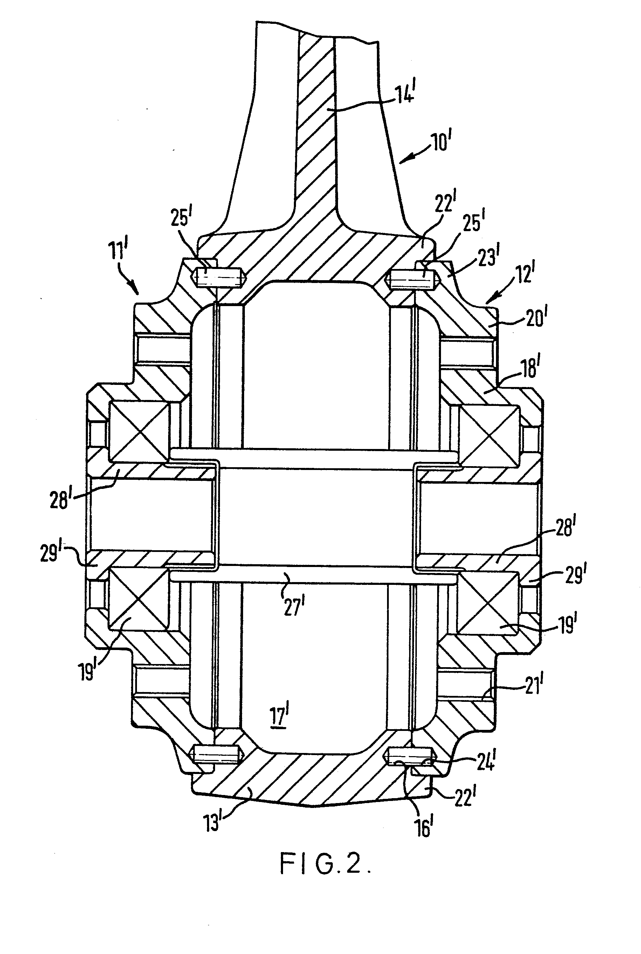

Instead of providing the bosses 22 on the carriers 11 and 12, the bosses may be provided on the hub portion 13 to receive the carriers 11 and 12. Indeed such an arrangement is shown in Figure 2. It is also conceivable that the bosses 15 could be omitted altogether by providing an accurate fit between the drive pins 25 and respective holes 16 and 24 in the hub portion 13 and the carriers 11 and 12.

Also, one of the two carriers could be made integral with the wheel.

Moreover, instead of using the spacer 27 and the end caps 28 other methods may be used for preventing the carriers 11 and 12 from moving away from the hub portion 13 of the wheel.

For example, internally threaded slip rings could be fitted into the hub portion of the wheel and the carriers could be screw threaded to the slip rings. When the carrier is fully engaged with the slip ring, the slip ring turns with a slight interference fit in the hub portion to align drive pin holes in the carrier and hub portion. Drive pins are then inserted through the carrier to project into the hub.

Alternatively, the carriers could be threaded directly into the hub portion but in this case the drive pin holes could not be pre-drilled; or the carriers could be secured to the hub portion with adhesive.

Instead of each drive pin being located in one of the holes in the hub portion and a corresponding hole in one of the carriers, the drive pins could be mounted on an intermediate attachment ring interposed between the hub portion and each carrier. One set of drive pins would project from one face of the attachment ring and locate in the holes in the hub portion and another set of drive pins would project from an opposite face of the attachment ring and locate in the holes in the carrier. In this case the holes in the carriers need not be aligned with holes in the hub portion because the two sets of drive pins could be angularly offset from one another.

The embodiment in Figure 2 as previously mentioned shows the bosses 22' on the hub 13' rather than on the carriers 11' or 12'. In this case the outside diameter of each carrier 11', 12' is preferably knurled. Moreover, a bonding agent may be provided between each boss 22' and the respective carrier. In addition, the carriers 11' and 12' shown in Figure 2 are further modified so that the bearing assemblies 19' are supported outwardly by the carriers to thereby prevent these bearing assemblies from dropping out of the carriers under any circumstances.

Finally the carriers 11 and 12 or 11' and 12' could be of larger diameter in which case the holes 21 or 21' can be provided on a pitch circle diameter greater than the pitch circle diameter of the holes 24 or 24'.

The invention thus makes it possible for a supplier to make up a wheel assembly to fit many different types of motor cycle and take many different sizes of tyre, from a realistic number of component parts and this means that a customer's particular requirements can be met quickly and easily.

CLAIMS:

1. A motor cycle wheel assembly, comprising a wheel (10) having a rim portion and a hub portion (13), at least one carrier (11,12) for a brake disc, sprocket wheel or the like, the carrier having been manufactured separately from the wheel, the hub portion (13) and carrier (11,12) each having a plurality of holes (16,24) spaced angularly about the axis of the wheel assembly, drive pins (25) located in the holes of the hub portion and of the carrier to connect the carrier to the hub portion for rotation therewith, and means (27,28) for preventing the carrier and hub portion from moving away from each other along the axis of the wheel assembly.

2. The wheel assembly of Claim 1, wherein the holes (16) in the hub portion (13) are in register with the holes (24) in the carrier (11,12) and each drive pin (25) is located in one of the holes in the hub portion and in a corresponding hole in the carrier.

3. The wheel assembly of Claim 1 or Claim 2, comprising two carriers (11,12) manufactured separately from the wheel one on either side of the hub portion (13) of the wheel, each carrier being connected to the hub portion

9

of the wheel for rotation therewith by drive pins (25) located in holes (16,24) in the hub portion and the carriers and each carrier being prevented from moving away from the hub portion along the axis of the wheel assembly.

4. The wheel assembly of anyone of Claims 1-3, wherein means (22,22') are provided for preventing radial movement of the or each carrier relative to the hub portion.

5. The wheel assembly of Claim 4, wherein the means for preventing radial movement of the or each carrier comprises a male part (22 in Fig 1) on one of the hub portion (13) and the carrier (11,12) and a female part (22' in Fig 2) on the other of the hub portion and the carrier.

6. The wheel assembly of Claim 5, wherein the female part is a cylindrical boss (22') and the male part is a cylindrical projection which extends into the cylindrical boss.

7. The wheel assembly of Claim 6, wherein the mating surfaces of the boss (22') and projection are disposed radially outwards of the drive pins (25).

10

8. The wheel assembly of anyone of the preceding claims, wherein a bearing assembly (19) is mounted in the or each carrier (11,12).

9. The wheel assembly of anyone of the preceding claims, wherein the means for preventing the or each carrier from moving away from the hub portion along the axis of the wheel assembly comprises a spacer (27) which extends through a central bore (17) in the hub portion (13) and into the or each carrier (11,12) and two end caps (28) each provided with a radially outwardly extending flange (29) or projection(s), the end caps being secured to opposite ends of the spacer.

10. The wheel assembly of claim 9, wherein the spacer (27) and end caps (28) have complementary internal and external screw threads, respectively.

11. The wheel assembly of anyone of the preceding claims, the wheel assembly being symmetrical with respect to the two sides of the wheel (10).

12. The wheel assembly of anyone of claims 1-10, the wheel assembly being assymetrical with respect to the two sides of the wheel (10).

11

13. The wheel assembly of anyone of the preceding claims, wherein the or each carrier (11,12) has holes (21) for receiving fastening members for securing a brake disc or sprocket wheel thereto.

14. The wheel assembly of anyone of claims 1-12, wherein the or at least one carrier has a brake disc integral therewith.

15. The wheel assembly of anyone of the preceding claims, wherein the wheel (10) and the or each carrier (11,12) are cast from a light alloy, such as a magnesium or aluminium alloy.

16. A brake disc or sprocket wheel carrier for a motor cycle wheel assembly according to anyone of the preceding claims, wherein the carrier (11,12) does not form an integral part of the motor cycle wheel (10) and has a plurality of holes (24) spaced angularly about the axis of the carrier for receiving drive pins (25) which in use connect the carrier to the wheel for rotation therewith.

FIG.1.

FIG.2.